Europäisches Patentamt

European Patent Office

Office européen des brevets

(19)

(11) Veröffentlichungsnummer: **0 146 157**
**A2**

(12) **EUROPÄISCHE PATENTANMELDUNG**

(21) Anmeldenummer: **84201576.0**

(22) Anmeldetag: **01.11.84**

(51) Int. Cl.⁴: **H 01 R 13/52,** H 01 R 13/58, H 02 G 15/24

(30) Priorität: **03.11.83 NL 8303795**

(43) Veröffentlichungstag der Anmeldung: **26.06.85**
**Patentblatt 85/26**

(84) Benannte Vertragsstaaten: **AT BE CH DE FR GB IT LI LU NL SE**

(71) Anmelder: **WAVIN B.V., Händellaan 251, NL-8031 EM Zwolle (NL)**

(72) Erfinder: **Fehrmann, Heinrich, Oster Escher Fleer 17, D-4472 Haren 1 (DE)**
Erfinder: **Irmer, Adolf, Oelwerkstrasse 101, D-4478 Geeste 1 (DE)**
Erfinder: **Guettouche, Ali, Johannesstrasse 7, D-4472 Haren (DE)**

(74) Vertreter: **van der Veken, Johannes Adriaan et al, EXTERPATENT Willem Witsenplein 4, NL-2596 BK 's-Gravenhage (NL)**

(54) Vorrichtung zur Verbindung von zwei rohrförmigen Kunststoffkabelumhüllungen.

(57) Vorrichtung zur Verbindung von zwei rohrförmigen-Kunststoffkabelumhüllungen (1) zum Schutz eines in der Kabelumhüllung (1) aufgenommenen Kabels zum Übertragen von Signalen, bestehend aus einem rohrförmigen Verbindungsorgan (3) mit Stosskragen (4) und einem mit der Umhüllung (1) und mit dem rohrförmigen Verbindungsorgan (3) zusammenwirkenden, Zugfestigkeit vermittelnden Kupplungsorgan (10). Das rohrförmige Verbindungsorgan wird von einer Muffe (3) mit einem inneren Stosskragen (4) und mit zu dessen beiden Seiten angebrachten Dichtungsorganen (8) gebildet.

Zwischen jedem Dichtungsorgan (8) und dem nächstliegenden Muffenende (11, 11') ist ein Zugfestigkeit vermittelndes Kupplungsorgan (10) angebracht. Diese Verbindungsvorrichtung vereinfacht den Verbindungsvorgang und gewährleistet eine gute Zugfestigkeit sowie eine einwandfreie Abdichtung der Innenseite der Kabelumhüllungen gegenüber der Umgebung.

- 1 -

Vorrichtung zur Verbindung von zwei
rohrförmigen Kunststoffkabelumhüllungen.

Die Erfindung bezieht sich auf eine Vorrichtung zur
Verbindung von zwei rohrförmigen Kunststoffkabelumhüllungen
zum Schutz eines in der Kabelumhüllung aufgenommenen Kabels
zum Uebertragen von Signalen, bestehend aus einem rohrförmigen Verbindungsorgan mit Stosskragen und einem mit der
Umhüllung und mit dem rohrförmigen Verbindungsorgan
zusammenwirkenden Zugfestigkeit vermittelnden Kupplungsorgan.

Eine solche Verbindungsvorrichtung für zwei rohrförmige
Kunststoffkabelumhüllungen, in denen ein Kabel zum Übertragen
von Daten aufgenommen ist, ist bekannt. Zum Entfernen eines
beschädigten oder nicht gut arbeitenden Kabels aus der Kabelumhüllung ist das Kabel freiliegend in der Kabelumhüllung
aufgenommen.

Bei dieser bekannten Vorrichtung wird über ein rohrförmiges
Kupplungsorgan mit einem äusseren Stosskragen und an der
Aussenseite gelegenen zahnförmigen Erhöhungen ein erwärmtes
erweitertes Ende einer Kunststoffkabelumhüllung geschoben
und dann an beiden Seiten des äusseren Stosskragens ein Ring
angebracht, um das erweiterte Ende der Kabelumhüllung klemmend auf das rohrförmige Kupplungsorgan zu drücken, wobei die zahnförmigen Erhöhungen als Zugfestigkeit vermittelndes Kupplungsorgan wirksam sind.

Diese bekannte Verbindung hat den Nachteil, dass man die Kunststoffkabelumhüllungen zum Herstellen der Verbindung mit einer Erweiterung versehen muss, was viel Zeit benötigt und zu einem hohen Arbeitsaufwand führt. Ausserdem ist diese Verbindung nicht einwandfrei feuchtigkeits- und gasdicht, was eine zwingende Voraussetzung bei solchen Kunststoffkabelumhüllungen ist, um die Kabel in den Umhüllungen vor Feuchtigkeitseinwirkung zu schützen.

Ein anderer Nachteil ist, dass man das erweiterte Ende der Kunststoffkabelumhüllung erwärmen muss, um diese Erweiterung gut über die zahnförmigen Erhöhungen auf der Aussenseite des ringförmigen Kupplungsorgans zum Herstellen einer zuverlässigen zugfesten Verbindung schieben zu können, wobei ausserdem noch ein Druckring zu verwenden ist, der auf der Aussenseite der Erweiterung der Kunststoffkabelumhüllung z.B. durch Schrauben, angebracht werden muss. Dieses Schrauben erfordert wiederum das Anbringen eines Gewindes auf der Aussenseite der Kunststoffkabelumhüllungen.

Die Aufgabe der Erfindung ist es, eine Verbindungsvorrichtung der oben erwähnten Art zu schaffen, die den Verbundungsvorgang vereinfacht und eine gute Zugfestigkeit sowie eine einwandfreie Abdichtung der Innenseite der Kabelumhüllungen gegenüber der Umgebung gewährleistet.

Diese Aufgabe wird erfindungsgemäss dadurch gelöst, dass das rohrförmige Verbindungsorgan von einer Muffe mit einem inneren Stosskragen und mit zu dessen beiden Seiten angebrachten Dichtungsorganen gebildet und zwischen jedem Stosskragen und dem nächstliegenden Muffenende ein Zugfestigkeit vermittelndes Kupplungsorgan angebracht ist, vorzugsweise ist zwischen jedem Dichtungsorgan und dem nächstliegenden Muffenende ein Zugfestigkeit vermittelndes Kupplungsorgan angebracht.

Durch diese Ausgestaltung kann die Verbindung sehr schnell hergestellt werden, indem einfach ein Kunststoffkabelumhüllung ohne weitere Vorbehandlung in die Muffe geschoben wird, bis sie gegen den inneren Stosskragen stosst, wobei dann das Dichtorgan eine gute Dichtung gegenüber der Umgebung herbeiführt und andererseits das mit der Muffe und mit der Aussenseite der Kunststoffkabelumhüllung zusammenwirkende Kupplungsorgan eine sehr zuverlässige zugfeste Verbindung bewirkt.

Vorteilhaft ist der Innendurchmesser des inneren Stosskragens der Muffe im wesentlichen dem Innendurchmesser der Kunststoffkabelumhüllung gleich, wobei man einen sehr glatten Uebergang zwischen zwei miteinander verbundenen Kabelumhüllungen erreicht, so dass beim Einziehen eines Kabels in eine eine solche Verbindungsvorrichtung umfassende Kabelumhüllung nicht die Gefahr besteht, dass das Kabel hinter dem inneren Stosskragen hängen bleibt.

Vorzugsweise besteht das Kupplungsorgan aus einem Ring aus federndem Material mit in Richtung der Achse und des Stosskragens geneigt angebrachten Lippen, welche mit der Aussenseite der Kunststoffkabelumhüllung klemmend zusammenwirken, so dass die Kunststoffkabelumhüllung sehr einfach in die Muffe geschoben, jedoch nicht mehr aus der Muffe herausgezogen werden kann, da die geneigt angebrachten Lippen ein Herausziehen der Kabelumhüllung verhindern. Vorteilhaft besteht das Kupplungsorgan aus einem gebogenen Ring mit Schlitzen.

Die Kunststoffkabelumhüllung besteht vorteilhaft aus einem Polyäthylenrohr, während die Muffe aus Metall oder Kunststoff, vorzugsweise aus einem faserverstärkten Kunststoff oder aus einem thermoplastischen Kunststoff, besteht.

In der Umhüllung ist vorteilhaft ein Glasfaserkabel aufgenommen, wobei dafür zu sorgen ist, dass ein guter feuchtigkeits- und gasdichter Verschluss der Innenseite der Kunststoffkabelumhüllung gegenüber der Umgebung gewährleistet ist.

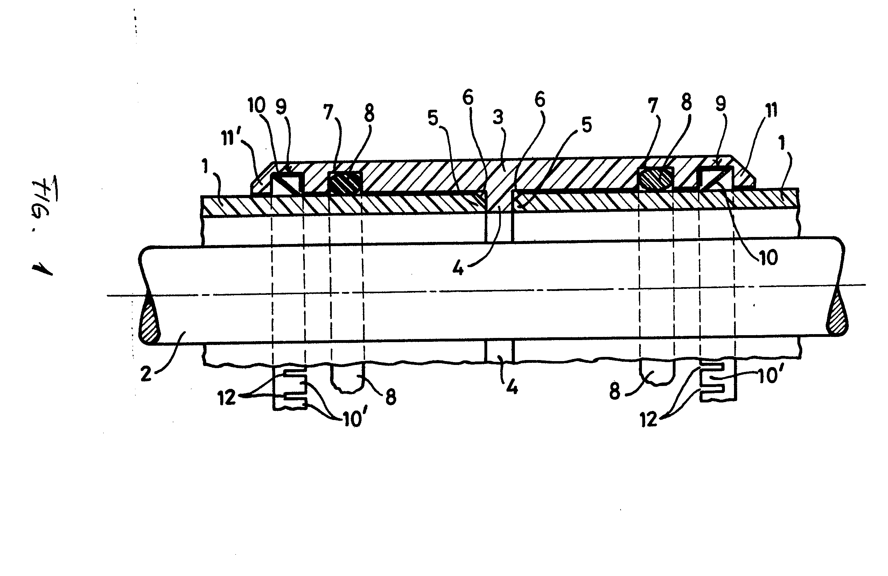

Die Erfindung wird im folgenden anhand eines Ausführungsbeispiels in Verbindung mit der Zeichnung näher erläutert, in der eine erfindungsgemässe Verbindung im Längsschnitt gezeigt ist.

Die Verbindung umfasst zwei rohrförmige Kunststoffkabelumhüllungen 1 aus Polyäthylenrohr mit stirnseitigen Enden 5, die an den Wandflächen des inneren Stosskragens 4 einer Muffe 3 als Verbindungsorgan anliegen. Zum Einführen der rohrförmigen Kunststoffkabelumhüllungen 1 in die Muffe 3 sind vorteilhaft die Enden der Kunststoffkabelumhüllung 1 mit einer Abschrägung 6 versehen.

Zur Erzielung eines guten feuchtigkeits- und gasdichten Verschlusses ist zu beiden Seiten des inneren Stosskragens 4 eine Nut 7 in der Muffe 3 angebracht, die mit einem Dichtring 8 versehen ist.

Zwischen der Nut 7 und dem nächstliegenden Ende 11, 11'
der Muffe 3 ist eine Nut 9 zur Aufnahme eines Zugfestigkeit
vermittelnden Kupplungsorgans 10 in Form eines Ringes aus
federndem Metall mit geneigt angebrachten Lippen 10'
gebildet, die in Achsrichtung und in Richtung des
inneren Stosskragens 4 geneigt sind. Vorteilhaft besteht
das Kupplungsorgan aus einem gebogenen Ring, wobei die
Lippen 10' durch Schlitze 12 im Ring begrenzt sind.

In den Kunststoffkabelumhüllungen 1 ist ein Glasfaserkabel
zum übertragen von Signalen aufgenommen.

Ansprüche:

1.    Vorrichtung zur Verbindung von zwei rohrförmigen Kunststoffkabelumhüllungen (1) zum Schutz eines in der Kabelumhüllung (1) aufgenommen Kabels zum übertragen von Signalen, bestehend aus einem rohrförmigen Verbindungsorgan (3) mit Stosskragen (4) und einem mit der Umhüllung und mit dem rohrförmigen Verbindungsorgan zusammenwirkenden, Zugfestigkeit vermittelnden Kupplungsorgan, dadurch gekennzeichnet, dass das rohrförmige Verbindungsorgan von einer Muffe (3) mit einem inneren Stosskragen (4) und mit zu dessen beiden Seiten angebrachten Dichtungsorganen (8) gebildet und zwischen jedem Stosskragen (4) und dem nächstliegenden Muffenende (11, 11') ein Zugfestigkeit vermittelndes Kupplungsorgan (10) angebracht ist.

2.    Vorrichtung nach Anspruch 1, dadurch gekennzeichnet, dass der Innendurchmesser des inneren Stosskragens (4) der Muffe (3) im wesentlichen dem Innendurchmesser der Kunststoffkabelumhüllung (1) gleich ist.

3.    Vorrichtung nach Anspruch 1 oder 2, dadurch gekennzeichnet, dass das Kupplungsorgan (10) aus einem Ring aus federndem Material mit in Achsrichtung und in Richtung des Stosskragens (4) geneigten Lippen (10') besteht, die mit der Aussenseite der Kunststoffkabelumhüllung (1) im Klemmeingriff gehalten sind.

4.    Vorrichtung nach Anspruch 3, dadurch gekennzeichnet, dass das Kupplungsorgan (10) aus einem gebogenen Ring mit Schlitzen (12) besteht.

0146157

5.      Vorrichtung nach einem oder mehreren der Ansprüche
1 bis 4, dadurch gekennzeichnet, dass die an den Wandflächen
des Stosskragens (4) anliegenden stirnseitigen Enden (5)
der Kunststoffkabelumhüllung mit einer Abschrägung (6)
versehen sind.

6.      Vorrichtung nach einem oder mehreren der Ansprüche
1 bis 5, dadurch gekennzeichnet, dass in der Kunststoffkabelumhüllung ein Glasfaserkabel (2) aufgenommen ist.

7.      Vorrichtung nach einem oder mehreren der Ansprüche
1 bis 6, dadurch gekennzeichnet, dass zwischen jedem
Dichtungsorgan (8) und dem nächstliegenden Muffenende
(11, 11') ein Zugfestigkeit vermittelndes Kupplungsorgan
(10) angebracht ist.

Fig. 1

0146157

1/1